# EUROPEAN PATENT APPLICATION

(11) **EP 0 663 593 A2**
(43) Date of publication of application: **19.07.1995**
(21) Application number: 95300216.9
(22) Date of filing: 13.01.1995
(51) Int. Cl.: G01N 27/447

(54) **Gel electrophoresis**

(30) Priority: 14.01.1994 ZA 94286
(71) Applicant: Bissbort, Siegbert Heinrich, Pretoria, Transvaal (ZA); Nieman, Erik, Pretoria (ZA); Steer, Gavin Milton, Illiondale, Edenvale 1610 (SA)
(72) Inventor: Bissbort, Siegbert Heinrich, Villieria, Pretoria 0186 (SA)
(74) Representative: Pacitti, Pierpaolo A.M.E.

(57) **Abstract**

Method of establishing the position, in a gel, of a compound separated in the gel from one or more other compounds by gel electrophoresis. The method comprises the step of moistening a dry inert sorbent substrate, which has been pre-impregnated with a constituent forming part of a detection agent, to impregnate the substrate in moist form with the detection agent. The method also comprises the step of bringing the moistened substrate into contact with the gel containing said compound separated in the gel by electrophoresis. The separated compound in the gel is allowed to react with said detection agent, to cause a detectable change at a detectable position in the gel or on the substrate with the position of the detectable change in the gel or on the substrate providing an indication of the position of the separated compound in the gel.

## Description

THIS INVENTION relates to gel electrophoresis. More particularly, this invention relates to a method for establishing the position, in a gel, of a substance or compound separated in the gel from one or more other compounds by gel electrophoresis; to an accessory and kit for use in the method; and to a process for making the accessory.

According to the invention there is provided a method of establishing the position, in a gel, of a compound separated in the gel from one or more other compounds by gel electrophoresis, the method comprising the steps of:
moistening a dry inert sorbent substrate, which has been pre-impregnated with a constituent forming part of a detection agent, to impregnate the substrate in moist form with the detection agent, and bringing the moistened substrate into contact with the gel containing said compound separated in the gel by electrophoresis;
causing or allowing the separated compound in the gel to react with said detection agent to cause a detectable change at a detectable position in the gel or on the substrate; and
determining the position of the detectable change in the gel or on the substrate, the position of the detectable change in the gel or on the substrate providing an indication of the position of the separated compound in the gel, and the moistening being by means of water containing, dissolved therein, no more than part of the detection agent.

Bringing the moistened substrate into contact with the gel may be by first overlapping the gel with a strip or sheet of the substrate in a dry state, and then moistening the substrate by spraying the water on to the strip or sheet. In another embodiment, the substrate may be moistened with water or a said solution prior to being applied to the gel, preferably immediately prior thereto. Accordingly, a strip or sheet of the substrate may be moistened prior to being brought into contact with the gel.

The substrate may be impregnated with the detection agent in complete from, the moistening being by means of water having no part of the detection agent dissolved therein. Alternatively, the substrate may be impregnated with part of the detection agent, the moistening being by means of water containing the remaining part of the detection agent dissolved therein, the parts of the detection agent impregnated in this substrate and dissolved in the water together making up the detection agent in complete form. In other words, the moistening may be with water if the substrate is impregnated with the detection agent in complete form, or it may be with an aqueous solution if the substrate is impregnated with one or more constituents of a detection agent, the solution comprising part of the detection agent in the form of one or more constituents of the detection agent, and the constituents in the substrate and solution together making up the complete detection agent. As mentioned above, moistening may be by spraying.

The substrate will then be kept in contact with the gel for a sufficient period to allow the reaction between the detection agent and the substance or compound in the gel to form a detectable, and conveniently a visible, reaction product. Naturally, more than one substrate may be employed simultaneously or in succession on the gel, if the positions of more than one substance separated in the gel by the electrophoresis are to be determined.

The method of establishing the positions in gels of substances or compounds separated by gel electrophoresis in accordance with the invention may be applied to various conventional staining protocols such as general protein staining (conventional electrophoresis, two-dimensional electrophoresis and iso-electric focussing); enzyme staining; immunofixation techniques; DNA (deoxyribonucleic acid) or RNA (ribonucleic acid) staining techniques, particularly following polymerase chain reaction (PCR) amplifications, or the like. Accordingly, the method may include selecting the detection agent from chromogenic stains, fluorogenic stains, radioactive stains, chemical reagent stains, electron transfer dye stains, antigen detection stains, antibody/enzyme-coupled reaction detection stains, immunofixation stains, DNA (deoxyribonucleic acid) stains, RNA (ribonucleic acid) stains, protein stains, and enzyme stains.

Naturally, the amount of detection agent or part thereof pre-impregnated into the substrate, and the concentration of any part of the detection agent dissolved in the water, should be determined by routine experimentation for effective detection of the position of the separated compound in the gel.

According to a further aspect of the invention there is provided a gel electrophoresis accessory for use in the method described above, which accessory comprises an inert sorbent substrate containing, impregnated therein, at least part of a detection agent for reacting with and rendering detectable the position, in a gel, of a compound separated in the gel by gel electrophoresis from one or more other compounds, the substrate being in a dry, moisture-free state.

By dry and moisture-free is meant that the moisture content of the substrate is at most 6% by mass preferably at most 1%. As mentioned above, the detection agent may be selected from chromogenic stains, fluorogenic stains, radioactive stains, chemical reagent stains, electron transfer dye stains, antigen detection stains, antibody/enzyme-coupled reaction detection stains, immunofixation stains, DNA (deoxyribonucleic acid) stains, RNA (ribonucleic acid) stains, protein stains, and enzyme stains. Specific stains comprising the detection agent may be selected from tetrazolium salts, eg methyl thiazolyl tetrazolium (MTT) and/or nitro blue tetrazolium (NBT), phenazine methosulphate (PMS), 4-methylumbelliferylphosphate, phenolphthalein, eg phenolphthalein diphosphate, fluoroscein, alpha-naphthol, beta-naphthol, diazonium salts, 3-amino-9-ethyl carbazole, a suitable antibody coupled to peroxidase, D-galactose[¹⁴C] (radioactive), Fast Blue B.

In principle it is possible to impregnate the substrate with more than one detection agent to provide a multi-purpose strip for establishing the positions of a plurality of compounds in the gel, but this will generally not be the case in practice.

The substrate may contain, impregnated therein, the detection agent in complete form, the accessory being capable of activation for use in the method described above by moistening thereof with water. Instead, the substrate may contain, impregnated therein, part of the detection agent, the accessory being capable of activation by moistening thereof with water containing, dissolved therein, the remaining part of the detection agent, the parts of the detection agent in the substrate and in the solution together making up the detection agent in complete form.

The substrate may be selected from filter paper and cellulose acetate. Naturally, any suitable material can be used for the substrate. The substrate may be in the form of a strip of sheet material.

In another embodiment of the invention, when in sheet form, the substrate sheet may be sub-divided into a plurality of strips, each strip abutting or adjacent an adjoining strip and detachable from one another. Although the strips may not be detachable from one another, and can in principle be used simultaneously with each strip in contact with a separate gel, usually, the substrate will form part of a sheet, the sheet being subdivided by slits into a plurality of interconnected strips, detachable from one another. Each strip forming the sheet may contain the same or a different detection agent impregnated therein, so that, in use, each strip will be used to establish the position of the same or a different substance or compound separated in the gel by gel electrophoresis, as the case may be. In other words, a plurality of the same or different substances or compounds can be detected in a gel after a gel electrophoretic run by employing strips from the sheet comprising said plurality of strips. Instead, the accessory may be in the form of a pad of strips or sheets from which the strips or sheets are detachable.

The substrate may form part of a kit or system, the kit or system comprising a moistening agent, the moistening agent comprising, as indicated above, water such as deionized water, or an aqueous solution comprising eg deionized water having, dissolved therein, one or more constituents of the detection agent.

Accordingly, according to another aspect of the invention there is provided a kit for establishing the position, in a gel, of a compound separated from one or more other compounds in the gel by gel electrophoresis, the kit comprising an inert sorbent substrate containing, impregnated therein, a constituent forming at least part of a detection agent for reacting with and rendering detectable the position, in the gel, of the compound, and a moistening agent comprising water containing dissolved therein no more than part of the detection agent, the substrate being in a dry, moisture-free state and being capable of activation by moistening thereof with the moistening agent, so that the substrate, in moist form, is impregnated with the detection agent in complete form.

The moistening agent may be selected from water and water having, dissolved therein, no more than part of the detection agent.

The substrate may be an accessory as described herein.

The kit or system may be packaged with the substrate and moistening agent in one or more compartments in a common package to form a detection pack, or they may be contained in separate containers. When in strip form, the substrate may be present as a plurality of identical strips enclosed in a container, which may be a light-free hermetically sealed and/or a refrigeratable container, eg such as a metal foil container. The accessory may thus be contained in a sealed, airtight, light-opaque resealable container, the moistening agent being contained in a sealed, releasable vessel, such as a bottle, can or flask which may have a spray nozzle.

Naturally, if necessary, the substrate should be shielded both from light and from ultraviolet radiation to reduce any adverse affects which light or ultraviolet radiation may have on the substrate, particularly on any constituent of the detection agent impregnated therein, and the container may thus also be ultra-violet opaque.

According to another aspect of the invention there is provided a process for making the gel electrophoresis accessory described above, the process comprising the steps of:
dissolving or dispersing a constituent forming at least part of a detection agent in a liquid to form a mixture;
impregnating an inert sorbent substrate with said mixture; and
drying the substrate by evaporating the liquid, the detection agent being capable of reacting with and rendering detectable the position in a gel, of a compound separated in the gel from other compounds by gel electrophoresis.

Typically the liquid will be water; and the mixture may be a solution of a constituent or constituents of the detection agent in the liquid.

The mixture containing the constituent may contain a buffer, when the liquid is water and a pH of a particular value is required in the accessory when it has been moistened with water. In other words, when the liquid is water, the process may include admixing a buffer into the mixture for providing water impregnated into the substrate with a desired pH.

Drying of the substrate is conveniently by freeze-drying or any other suitable method,and acts to lengthen the shelf-life of the impregnated dried substrate, the freeze-drying reducing any danger of heat damage to the detection agent or part thereof impregnated into the substrate.

In particular, the dispersing of said at least part of the detection agent in the liquid may be by dissolving it in water to form a solution, the drying being by freeze-drying to a moisture content of at most 6%, preferably at most 1%, by mass.

In the method and process of the invention, and the accessory, and the kit, the detection agent may comprise a staining agent, and it may be selected according to its suitability to react with the electrophoretically separated substance or compound to be detected, thereby to form a detectable or visible reaction product, the detection agent accordingly optionally being a staining compound or composition.

Examples of staining agents which can be employed as such staining compounds or compositions include those as herein described. Naturally, if the staining agent is dispersed in an aqueous liquid, prior to impregnation into the substrate, the pH of the liquid will be selected to ensure that the staining agent remains stable with regard to its intended activity, if this activity is pH-sensitive.

Drying acts to immobilize the staining compound or composition in the substrate, and, as indicated above, may be by means of freeze-drying, the drying or freeze-drying selected for this purpose being dependent on various considerations, such as the nature of the staining agent employed, the liquid used, and the sensitivity of the staining agent, or of any constituent thereof, to heat damage.

As mentioned above, the substrate may comprise a sheet of any suitable inert sorbent material, such as filter paper, cellulose acetate or the like. By inert is meant that the substrate is non-reactive with regard to the staining mixture or composition, with regard to the liquid used for the impregnation and with regard to the substance or compound being detected and with regard to the associated gel.

In some cases, a complete detection agent will undergo degradation with time, eg because of undesired reactions between constituents thereof, even in a dry, frozen state. It is in these cases that it is preferable to separate the constituents of the detection agents from each other or from one another, so that only that or those constituents which have an indefinite shelf-life in the dry state are impregnated into the substrate, the other constituent or constituents, which can cause degradation of the impregnated constituent or constituents, forming part of the liquid used to moisten the substrate upon, or immediately before, use, or forming part of another separate substrate.

Furthermore, in this case, incompatible constituents of a detection agent can be separately impregnated, as mentioned above, into separate sorbent substrates, the substrates being used together by being applied to the gel more or less simultaneously and moistened immediately before or after application to the gel, eg one substrate being used to overlay the gel and the other substrate being used to overlay the one substrate. In another embodiment, one substrate may be used to overlay the gel and moistened, to cause at least a partial reaction between the substrate and the gel before being removed after a pre-determined period and, thereafter, another substrate being used to overlay the gel and moistened in order to cause a detectable change at a detectable position in the gel or on the substrate. Naturally, if desired, a plurality of substrates, eg 3 or 4, can be used together simultaneously or one after the other to cause the detectable change in the gel or on the substrate.

In other embodiment, if the compound to be detected is at a very low concentration, at least two substrates may be used to overlay the gel on both sides of the gel to increase the concentration of the detection agent brought into contact with the gel. Naturally, many variations using a plurality of substrates in the method of the invention will be apparent to those of ordinary skill in the art.

The accessory may be suitable for use with the following staining methods:

### Chromogenic Staining Methods

Chromogenic staining methods are those which are used in the detection of certain enzymes (hydrolases) and which rely on the conversion of a colourless detection agent (reactant) to a coloured product by the enzyme concerned. For example, the use of phenolphthalein phosphate as a reactant for the detection of acid phosphatase, leads to the formation of phenolphthalein, which is bright pink in colour, at the site at which the reaction takes place.

### Fluorogenic Staining Methods

Fluorogenic staining methods are those which employ positive fluorescent staining and negative fluorescent staining. In positive fluorescent staining a highly fluorescent product is produced from a non-fluorescent detection agent (reactant) by enzyme action. Positive fluorescent staining methods employ derivatives of 4-methylumbilliferone as reactants (eg. for hydrolases) or use fluoroscein as a reactant. In negative fluorescent staining a non-fluorescent product is formed from a fluorescent detection agent (reactant). Negative fluorescent staining methods are used for the detection of dehydrogenases which generate oxidised coenzymes, nicotinamide adenine dinucleotide (NAD) or nicotinamide adenine dinucleotide phosphate (NADP), which are non-fluorescent, respectively from reduced coenzymes, NADH or NADPH, which are highly fluorescent.

### Radioactive Staining Methods

Radioactive staining methods depend on the detection of a radioactive product by conventional autoradiography on X-ray film and are used for the detection of samples containing DNA and RNA.

### Chemical Reagent Staining Methods

Chemical reagent staining methods involve staining techniques which employ chemical reagents, other than electron transfer dyes, to produce coloured compounds at sites of enzyme activity. There are two types, ie positive staining techniques in which a colour is formed by a reaction with a product of enzyme activity, or a negative staining technique in which a colour is formed by a reaction with a detection agent (reactant). Negative staining techniques are usually used in a two stage procedure, for each stage of which a different freeze-dried preparation is used. First, a gel is incubated with a reactant for a given period of time, and then a chemical colouring reagent is applied to produce a coloured background with pale areas thereon indicating the site of enzyme activity. Positive staining techniques utilize derivatives of alpha- and beta-naphthol and stabilised diazonium salts, and can be used for the examination of hydrolases. Typically, these staining agents are applied as a complete mixture in a one-step method, a coloured product being formed at the site of enzyme activity.

### Electron Transfer Dye Staining Methods

Electron transfer dye staining methods rely on the reduction of tetrazolium salts, (eg. MTT, or NBT), to form a dark blue-purple insoluble formazan dye at a site of enzyme activity; or the oxidation of 3-amino-9-ethyl carbazole to form a dark brown insoluble product. The latter dye, which is an oxidation dye, is a useful general purpose reagent for the detection of oxidases and peroxidases while the former dye, which is a reduction dye, is used extensively in dehydrogenase reactions.

### Antigen Detection Methods

In antigen detection methods antibody impregnated sheets are soaked in a solution containing a suitable concentration of antibodies, which are specific to an antigen that occurs in the gel. An antibody/antigen complex is then formed and can be detected using conventional protein staining methods.

### Antibody/Enzyme Coupled Reaction Detection Methods

Antibody/enzyme coupled reaction detection methods are used to detect reactions by using a substrate or a sheet which is impregnated with an antibody, said antibody being engineered to be coupled with a specific enzyme, eg. peroxidase. The coupled enzyme can be employed in the staining methods described above, to produce a highly visible product. Antibody/enzyme coupled reactions are useful when the antigen is known to be at a low concentration in the gel and any antibody/antigen complex resulting from the reaction is at concentrations which are too low for conventional protein staining methods to be effective.

The invention will now be described, by way of non-limiting illustration, with reference to the following Examples, and with reference to the accompanying diagrammatic drawings, in which:
Figure 1 shows a schematic plan view of an accessory according to the invention; and
Figure 2 shows a schematic three-dimensional view of an accessory according to the invention.

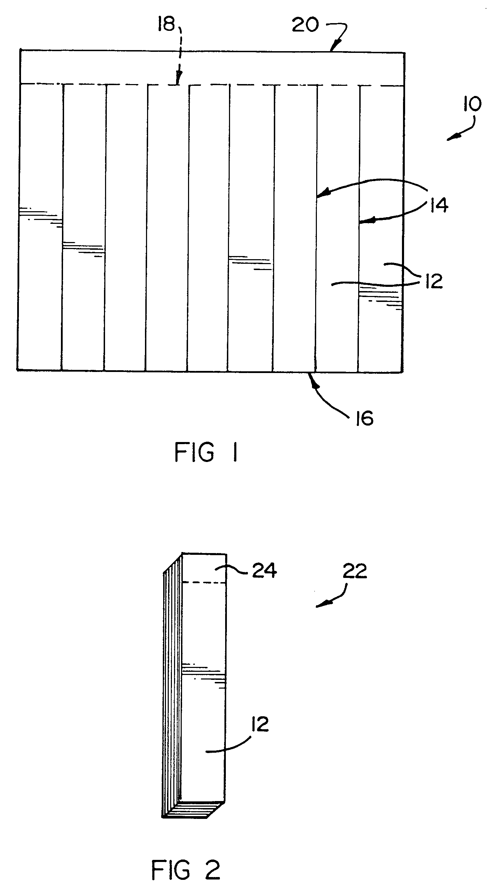

In Figure 1 an accessory according to the invention is shown in the form of a rectangular sheet of filter paper 10 and comprising a plurality of strips 12 separated from one another by slits 14 extending from one edge 16 of the sheet 10 to a position 18 adjacent the opposite edge 20 of the sheet 10. In Figure 2 the accessory is designated 22 and is in the form of a pad made up of similar rectangular strips 12 of filter paper adhesively secured together to form the pad, the strips 12 being secured together at 24, at one end of the pad. The strips 12 are, in accordance with the invention, impregnated with at least part of a detection agent as described herein, and are individually detachable from the sheet 10 or pad 22, as the case may be.

### EXAMPLE 1

### Staining for Detection of the Phosphoglucomutase (PGM) Enzyme

Phosphoglucomutase converts glucose-1-phosphate to glucose-6-phosphate in the presence of glucose-1,6-diphosphate, which acts as a catalyst. The glucose-6-phosphate which is formed is subsequently converted to 6-phosphogluconate by the enzyme glucose-6-phosphate dehydrogenase. For the conversion to 6-phosphogluconate reaction nicotinamide adenine dinucleotide phosphate (NADP) has to be present, which NADP is converted thereby to NADPH. A further enzyme, 6-phosphogluconate dehydrogenase, uses the 6-phosphogluconate as the reactant and forms ribose-5-phosphate. During this reaction a further molecule of NADPH is formed from NADP. Two molecules of NADPH are therefore formed from the glucose-1-phosphate molecule which initiated the reaction. NADPH in turn, reacts with MTT, a yellow, water-soluble compound, in the presence of an electron donor, PMS, to form an insoluble blue-purple formazan dye at the site where phosphoglucomutase (PGM) occurs in the gel.
A staining solution for this enzyme which can be employed is:

| CONSTITUENTS | VOLUME OR MASS |
|---|---|
| 0.1M Tris/HCl buffer - pH 7.4 | 30ml |
| Glucose-1-phosphate | 30mg |
| Glucose-1,6-diphosphate | 1mg |
| MgCl (magnesium chloride) | 30mg |
| NADP (nicotinamide adenine dinucleotide phosphate) | 30mg |
| MTT (methyl thiazolyl tetrazolium) | 30mg |
| PMS (phenazine methosulphate) | 1mg |
| Glucose-6-phosphate dehydrogenase (enzyme) available from Boehringer-Mannheim Products in South Africa | 100µℓ |
| 6-phosphogluconase (enzyme) 100µℓ available from Boehringer-Mannheim Products in South Africa | 50µℓ |

The ingredients are thoroughly mixed, decanted into a suitable container and filter paper is impregnated with the solution. The impregnated filter paper is then placed into a freeze-dryer where the solvent is rapidly removed and inactivation of the staining solution takes place. The shelf-or storage life of the freeze-dried sheet is dependent on the complexity of the staining solution employed to impregnate it, and can be reduced when secondary enzyme reactions can take place in the sheet, eg the PGM reaction above. For example, sheets employed for the PGM reaction have a shorter shelf-life than, for example, those for the lactate dehydrogenase (LDH) reaction in which no secondary enzyme reactions occur.

### EXAMPLE 2

### Staining for Detection of the Asparate Transaminase (AST) Enzyme

Aspartate transaminase detection involves the use of aspartate and alpha ketoglutarate as detection agents and forms oxaloacetate and glutamate as detectable products. Pyridoxal phosphate (PLP) acts as a catalyst and must be present in minute quantities. The oxaloacetate is subsequently converted to malate by the action of malate dehydrogenase, a reaction during which NADH is converted to NAD. A staining mixture which can be employed for this purpose is:

| CONSTITUENTS | VOLUME OR MASS |
|---|---|
| 0.1M Tris/HCl buffer - pH 8 | 30ml |
| Alpha ketoglutarate | 50mg |
| Sodium aspartate | 100mg |
| Pyridoxal phosphate (PLP) | 2mg |
| NADH (nicotinamide adenine dinucleotide, reduced) | 30mg |
| MTT (methyl thiazolyl tetrazolium) | 30mg |
| Malate dehydrogenase (enzyme) available from Boehringer-Mannheim Products in South Africa | 50µℓ |

The ingredients are mixed together and a freeze-dried sheet is prepared as described in Example 1 above. In addition, a further freeze-dried substrate containing the following compounds is prepared:

| CONSTITUENTS | VOLUME OR MASS |
|---|---|
| Phenazine methosulphate (PMS) | 5mg |
| Water | 30ml |

During the detection process, the substrate containing the alpha ketogluterate and sodium aspartate is incubated for approximately 25 minutes in contact with the gel. The reaction is monitored from time to time by viewing under an ultraviolet light with the reaction being complete when the highly fluorescent NADH is converted to NAD, the NAD being non-fluorescent. Final detection is effected by the addition of the further PMS-containing freeze-dried substrate to the gel which causes sites of enzyme activity to appear as white bands on a dark blue background. Optionally, in place of using the substrate containing PMS, the gel in which the enzyme under investigation occurs can be placed in a solution containing PMS (5mg PMS in 30ml water).

### EXAMPLE 3

### Staining for Detection of the Acid Phosphatase (ACP) Enzyme

Acid phosphatase splits the phosphate group from 4-methylumbelliferylphosphate to form a highly fluorescent product, 4-methylumbelliferone, which is visible under ultraviolet light (360nm). A staining mixture which can be employed for detection of this enzyme comprises:

| CONSTITUENTS | VOLUME OR MASS |
|---|---|
| 1M Sodium acetate/acetic acid buffer - pH 4.6 | 30ml |
| 4-methylumbelliferylphosphate | 5mg |

The above ingredients were mixed thoroughly and a freeze-dried substrate was prepared in accordance with the procedure described in Example 1.

### EXAMPLE 4

### Staining for Detection of the Acid Phosphatase (ACP) Enzyme

A further staining mixture which can be employed for detection of this enzyme comprises:

| CONSTITUENTS | VOLUME OR MASS |
|---|---|
| 1M Sodium acetate/acetic acid buffer - pH 4.6 | 30ml |
| Phenolphthalein diphosphate | 90mg |

The above ingredients in use are mixed thoroughly and a freeze-dried substrate is then prepared in accordance with the procedure described in Example 1. The impregnated substrate is then placed onto a gel and moistened with distilled water. The substrate is incubated in contact with the gel for approximately 4 hours at a temperature of 37°C. The reaction is monitored by applying no more than sufficient ammonia to the substrate to cause the pH of the substrate to become alkaline. Sites of enzyme (isozyme) activity appear as pink zones.

### EXAMPLE 5

### Staining for Detection of the Galaktokinase (GALK) Enzyme

A staining mixture which can be employed for detection of this enzyme comprises:

| CONSTITUENTS | VOLUME OR MASS |
|---|---|
| 0.2M Tris/HCl buffer - pH 7.2 | 30ml |
| D-Galactose [¹⁴C] (radioactive) | 100ml |
| Adenosine triphosphate (ATP) | 60mg |
| MgCl₂ | 50mg |

The above ingredients are in use mixed thoroughly and a freeze-dried substrate is prepared in accordance with the procedure described in Example 1. The impregnated substrate is then placed onto a gel and moistened with distilled water. The substrate and gel are incubated at a temperature of 37°C for 1-2 hours. The substrate is then removed and a further freeze-dried substrate is applied to the gel. The further freeze-dried substrate is prepared from the following constituents:

| CONSTITUENTS | VOLUME OR MASS |
|---|---|
| 0.1M Tris/HCl buffer - pH 7.0 | 30ml |
| Lanthanum chloride | 100mg |

The further lanthanum chloride containing freeze-dried substrate is incubated with the gel for 20 hours at a temperature of 4°C. The lanthanum chloride causes the radioactive D-Galaktose from the first substrate, which previously reacted with the Galaktokinase in the gel, to precipitate. The further substrate is then removed and the gel is washed for at least 3 hours with distilled water to remove any free radioactive D-Galaktose. The gel is then dried and final detection is effected by autoradiography of the gel, which is placed in contact with an X-ray film for a period of 1-2 weeks.

### EXAMPLE 6

### Staining for Detection of the Esterase (EST) Enzyme

A staining mixture which can be employed for detection of this enzyme comprises:

| CONSTITUENTS | VOLUME OR MASS |
|---|---|
| 0.05 M Phosphate buffer - pH 6.5 | 30ml |
| Fast Blue B | 30mg |
| 1% Solution of α-naphthyl acetate in 50% acetone | 2ml |

The above ingredients are in use mixed thoroughly and a freeze-dried substrate is prepared in accordance with the procedure described in Example 1. The substrate is applied to a gel and moistened with distilled water. The substrate and gel are then incubated at a temperature of 37°C for a period of 1-2 hours or until bands become visible, which bands indicate sites of enzyme activity

Advantages of the present invention include ease of use of the freeze-dried substrate, reductions in cost, safety in use, and reduction in time taken to carry out a gel electrophoresis process. The freeze-dried substrates or sheets can be stored for long periods of time and can be easily and rapidly applied to gels once electrophoresis has been completed, reducing or eliminating the lengthy and often hazardous preparation involved in the staining process. The freeze-dried substrates or sheets can also be prepared in bulk. In conventional staining methods, mistakes can be made in weighing of individual compounds when making up desired stains. It is a further advantage of the invention that any possible mistakes in preparing stains will be eliminated as the substrates have been pre-prepared and the detection agent has been pre-impregnated with the correct concentration of constituents forming the detection agent.

## Claims

1. A method of establishing the position, in a gel, of a compound separated in the gel from one or more other compounds by gel electrophoresis, the method being characterised in that it comprises the steps of:
moistening a dry inert sorbent substrate, which has been pre-impregnated with a constituent forming part of a detection agent, to impregnate the substrate in moist form with the detection agent, and bringing the moistened substrate into contact with the gel containing said compound separated in the gel by electrophoresis;
causing or allowing the separated compound in the gel to react with said detection agent, to cause a detectable change at a detectable position in the gel or on the substrate; and
determining the position of the detectable change in the gel or on the substrate,
the position of the detectable change in the gel or on the substrate providing an indication of the position of the separated substance or compound in the gel, and the moistening being by means of water containing, dissolved therein, no more than part of the detection agent.

2. A method as claimed in claim 1, characterised in that bringing the moistened substrate into contact with the gel is by first overlapping the gel with a strip or sheet of the substrate in a dry state, and then moistening the substrate by spraying the water on to the strip or sheet.

3. A method as claimed in claim 1, characterised in that a strip or sheet of the substrate is moistened prior to being brought into contact with the gel.

4. A method as claimed in any one of the preceding claims, characterised in that the substrate is impregnated with the detection agent in complete form, the moistening being by means of water having no part of the detection agent dissolved therein.

5. A method as claimed in any one of claims 1 to 3 inclusive, characterised in that the substrate is impregnated with part of the detection agent, the moistening being by means of water containing the remaining part of the detection agent dissolved therein, the parts of the detection agent impregnated in the substrate and dissolved in the water together making up the detection agent in complete form.

6. A method as claimed in any one of the preceding claims, characterised in that it includes selecting the detection agent from chromogenic stains, fluorogenic stains, radioactive stains, chemical reagent stains, electron transfer dye stains, antigen detection stains, antibody/enzyme-coupled reaction detection stains, immunofixation stains, DNA (deoxyribonucleic acid) stains, RNA (ribonucleic acid) stains, protein stains, and enzyme stains.

7. A gel electrophoresis accessory (10, 22) for use in the method as claimed in claim 1, characterised in that it comprises an inert sorbent substrate containing, impregnated therein, at least part of a detection agent for reacting with and rendering detectable the position, in a gel, of a compound separated in the gel by gel electrophoresis from one or more other compounds, the substrate being in a dry, moisture-free state.

8. An accessory as claimed in claim 7, characterised in that the detection agent is selected from chromogenic stains, fluorogenic stains, radioactive stains, chemical reagent stains, electron transfer dye stains, antigen detection stains, antibody/enzyme-coupled reaction detection stains, immunofixation stains, DNA (deoxyribonucleic acid) stains, RNA (ribonucleic acid) stains, protein stains, and enzyme stains.

9. An accessory as claimed in claim 8, characterised in that the detection agent is selected from methyl thiazolyl tetrazolium (MTT), nitro blue tetrazolium (NBT), phenazine methosulphate (PMS), 4-methylumbelliferylphosphate, phenolphthalein, fluoroscein, alpha-naphthol, beta-naphthol, diazonium salts, 3-amino-9-ethyl carbazole, an antibody coupled to peroxidase, D-galactose[¹⁴C](radioactive), Fast Blue B.

10. An accessory as claimed in claim 7, characterised in that the substrate contains, impregnated therein, the detection agent in complete form, the accessory being capable of activation by moistening thereof with water.

11. An accessory as claimed in claim 7, characterised in that the substrate contains, impregnated therein, part of the detection agent, the accessory being capable of activation by moistening thereof with water containing, dissolved therein, the remaining part of the detection agent, the parts of the detection agent in the substrate and in the solution together making up the detection agent in complete form.

12. An accessory as claimed in any one of claims 7 to 11 inclusive, characterised in that the substrate is selected from filter paper and cellulose acetate.

13. An accessory as claimed in any one of claims 7 to 12 inclusive, characterised in that the substrate is in the form of a strip (12) of sheet material.

14. An accessory as claimed in any one of claims 7 to 13 inclusive, characterised in that the substrate forms part of a sheet (10), the sheet being sub-divided by slits (14) into a plurality of interconnected strips (12), detachable from one another.

15. A kit for establishing the position, in a gel, of a compound separated from one or more other compounds in the gel by gel electrophoresis, characterised in that it comprises an inert sorbent substrate containing, impregnated therein, a constituent forming at least part of a detection agent for reacting with and rendering detectable the position, in the gel, of the compound, and a moistening agent comprising water containing dissolved therein no more than part of the detection agent, the substrate being in a dry, moisture-free state and being capable of activation by moistening thereof with the moistening agent, so that the substrate, in moist form, is impregnated with the detection agent in complete form.

16. A kit as claimed in claim 15, characterised in that the moistening agent is selected from water and water having, dissolved therein, no more than part of the detection.

17. A kit as claimed in claim 15 or claim 16, characterised in that the substrate is an accessory as claimed in any one of claims 7 to 14.

18. A kit as claimed in claim 17, characterised in that the accessory is contained in a sealed airtight, light-opaque resealable container, the moistening agent being contained in a sealed, resealable vessel.

19. A process for making a gel electrophoresis accessory as claimed in claim 7, the process being characterised in that it comprises the steps of:
dispersing a constituent forming at least part of a detection agent in a liquid to form a mixture;
impregnating an inert sorbent substrate with said mixture; and
drying the substrate by evaporating the liquid, the detection agent being capable of reacting with and rendering detectable the position in a gel, of a compound separated in the gel from other compounds by gel electrophoresis.

20. A process as claimed in claim 19, characterised in that the liquid is water, the process including admixing a buffer into the mixture for providing water impregnated into the substrate with a desired pH.

21. A process as claimed in claim 19 or claim 20, characterised in that the dispersing is by dissolving in water to form a solution, the drying being by freeze-drying to a moisture content of at most 6%.
